# DEMANDE DE BREVET EUROPEEN

(11) **EP 3 989 065 A1**
(43) Date de publication de la demande: **27.04.2022**
(21) Numéro de dépôt: 21212166.9
(22) Date de dépôt: 01.03.2016
(51) Int. Cl.: G06F 9/48

(54) **PROCÉDÉ D'EXÉCUTION ET CIRCUIT INTÉGRÉ**

(30) Priorité: 03.03.2015 FR 1551790
(62) Demande divisionnaire de: 16158071.7
(71) Demandeur: SAFRAN AEROTECHNICS, 78370 Plaisir (FR)
(72) Inventeur: DESCHAMPS, Mikaël, 78640 Saint Germain de la Grange (FR); SAINT-AUBIN, Gilles, 76690 Saint-Georges-sur-Fontaine (FR)
(74) Mandataire: Plasseraud IP

(57) **Abrégé**

L'invention concerne un procédé d'exécution d'au moins N lot d'instructions enregistrés dans une mémoire de travail avec N entier naturel supérieur ou égal à deux ; chaque lot d'instructions étant identifié par un nombre entier supérieur ou égal à zéro, appelé rang R ; ledit procédé étant exécuté par une unité de traitement connectée à ladite mémoire de travail (9), caractérisé en ce que les lots d'instructions sont exécutés (52) périodiquement ; la période d'un lot d'instruction de rang i est égale à deux fois la période d'un lot d'instruction de rang i-1, pour tout entier naturel i compris entre 1 et N.

## Description

La présente invention se situe dans le domaine des procédés de séquencement de commandes d'exécution de tâches. Ces procédés sont généralement appelés séquenceurs.

La présente invention se rapporte en particulier à un procédé d'exécution de lots d'instructions et à un circuit intégré.

Ce procédé d'exécution et ce circuit intégré peuvent, par exemple, être utilisés dans le domaine de l'aéronautique.

Les procédés de séquencement sont établis pour gérer des tâches prédéfinies d'un programme principal, par exemple, d'un programme de gestion de puissance électrique d'un avion. Ces procédés sont développés spécifiquement pour le programme qu'ils vont gérer temporellement. Des fenêtres temporelles sont allouées à l'exécution de chaque tâche du programme principal. La durée de chaque fenêtre temporelle est déterminée en fonction de la charge logicielle et des temps de latence de chaque tâche. Elle est figée une fois le procédé de séquencement programmé. Toutefois, lorsque le constructeur souhaite ajouter à ce programme principal une fonctionnalité supplémentaire ou un module spécifique, par exemple, pour adapter le programme principal à une gamme d'avions ou tout simplement pour répondre à une commande spécifique d'un client, l'ensemble du programme de séquencement doit être à nouveau développé et programmé pour tenir compte de cette fonctionnalité supplémentaire. Ce développement prend du temps et est coûteux.

Le but de la présente invention est de proposer un procédé d'exécution dans lequel il est toujours possible de rajouter une commande d'exécution pour une nouvelle fonctionnalité sans avoir besoin de reprogrammer l'ensemble du procédé.

A cet effet, l'invention a pour objet un procédé d'exécution conformé selon les caractéristiques de la revendication 1.

Avantageusement, ce procédé est configuré en fonction des besoins en charge logicielle et en latence du programme principal. Le rajout d'une commande d'exécution d'un nouveau lot d'instructions se fait simplement et rapidement sans impact sur le séquencement des lots d'instructions déjà existants.

Avantageusement, ce procédé présente une structure standard. Il peut s'adapter à différents besoins de charge logicielle et de latence.

Avantageusement, ce procédé est simple à programmer. De plus, ce procédé permet d'ajouter simplement une nouvelle tâche à un programme principal au cours du développement de ce programme principal.

L'invention a également pour objet un circuit intégré conformé selon l'objet les caractéristiques définies dans la revendication 2.

L'invention sera mieux comprise à la lecture de la description qui va suivre, donnée uniquement à titre d'exemple et faite en se référant aux figures sur lesquelles :
- la figure 1 est une vue schématique d'un exemple de circuit intégré selon la présente invention ;
- la figure 2 est un diagramme représentant une partie des étapes du procédé de séquencement selon l'invention ainsi qu'une étape du procédé d'exécution selon l'invention ;
- la figure 3 est un diagramme représentant un le détail d'une étape du procédé de séquencement illustré sur la figure 2 ;
- les figures 4 et 5 représentent un exemple d'implémentation du procédé de séquencement selon l'invention, dans lequel quatre lots d'instructions sont exécutés ; en particulier :
   ∘ la figure 4 est un graphique représentant les fenêtres temporelles attribuées à l'exécution de quatre lots d'instructions ;
   la figure 5 est un graphique représentant les interruptions d'interruptions temporelles générées pour obtenir les fenêtres temporelles illustrées sur la figure 4;
- la figure 6 est un diagramme représentant les étapes du procédé de séquencement selon l'invention permettant d'ajouter le séquencement d'un lot d'instructions supplémentaire ;
- la figure 7 est un diagramme représentant une étape du procédé de séquencement selon l'invention au cours de laquelle la durée des fenêtres temporelles est modifiée ; et
- la figure 8 est un diagramme illustrant des étapes d'une variante de réalisation du procédé de séquencement selon l'invention.

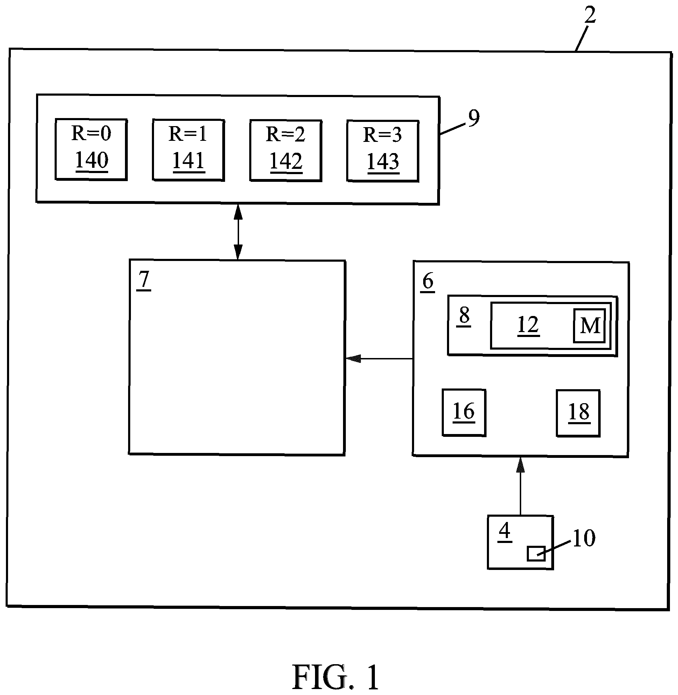

Le procédé d'exécution de lots d'instructions et le procédé de séquencement de commandes selon l'invention sont mis en oeuvre par un circuit intégré 2 représenté sur la figure 1. Ce circuit intégré 2 comporte un générateur d'interruptions 4 propre à générer périodiquement des interruptions temporelles IT, une unité de commande 6 connectée au générateur d'interruptions temporelles 4, une unité de traitement 7 connectée à l'unité de commande 6 et une mémoire de travail 9 connectée à l'unité de traitement 7.

Le générateur d'interruptions temporelles 4 comporte une horloge et un gestionnaire d'interruptions non représentés. Il est propre à générer une interruption temporelle IT, par exemple, toutes les 50 µs ou toutes les 1 ms.

Le générateur d'interruptions temporelles 4 peut comporter un élément de commande 10 permettant de faire varier la durée entre les interruptions temporelles IT.

La mémoire de travail 9 comporte N lots d'instructions. Chaque lot d'instructions est identifié par un nombre entier naturel supérieur ou égal à zéro, appelé rang R. Les valeurs dudit rang sont comprises entre un rang minimal Rmin et un rang maximal Rmax. Dans l'exemple de réalisation représenté sur les figures 1 à 5, les nombres entiers constituant les rangs R sont des nombres successifs. Ils débutent à 0 et se terminent à N-1. Ainsi, dans cet exemple, la mémoire de travail 9 comporte quatre lots d'instructions 140, 141, 142, 143 chacun associé à un rang parmi les rangs 0, 1, 2 et 3.

L'unité de commande 6 comporte une mémoire de commande 8 qui contient des instructions pour mettre en œuvre le procédé de séquencement selon la présente invention. Ces instructions constituent un microprogramme généralement appelé séquenceur 12. Ce séquenceur 12 comporte un seuil M prédéfini par un opérateur au cours d'une étape de configuration. Ce seuil prédéfini M peut être modifié par un opérateur après le développement du séquenceur.

L'unité de commande 6 est apte à réceptionner les interruptions temporelles IT provenant du générateur d'interruptions temporelles 4 et à exécuter le séquenceur 12 pour générer, dans un ordre prédéfini et à des moments prédéfinis, des commandes d'exécution des lots d'instructions 140, 141, 142, 143.

L'unité de commande 6 comporte un compteur principal 18 propre à incrémenter une valeur instantanée p pour compter le nombre d'interruptions temporelles IT réceptionnées, et un compteur secondaire 16 propre à incrémenter une valeur de calcul intermédiaire s appelée ci-après valeur instantanée s.

L'unité de commande 6 est adaptée pour générer une commande d'exécution d'un lot d'instructions 140, 141, 142, 143 choisi parmi les lots d'instructions enregistrés dans la mémoire de travail 9, sur réception de certaines interruptions temporelles IT à partir des valeurs instantanées s et p, comme décrit ci-après.

L'unité de traitement 7 est propre à recevoir la commande générée par l'unité de commande 6 et à déclencher l'exécution d'un lot d'instructions 140, 141, 142, 143.

L'unité de commande 6 et l'unité de traitement 7 sont, par exemple, constituées par un ou plusieurs Asic, processeur de calcul ou DMA.

En variante, l'unité de commande 6, l'unité de traitement 7, la mémoire de de commande 8 et la mémoire de travail 9 sont constituées par un processeur.

En variante, les rangs ne sont pas des nombres successifs. Dans un tel cas, des fenêtres temporelles au cours desquelles aucun lot d'instructions n'est exécuté, sont générées pour le ou les rangs manquants. En variante, la valeur des rangs ne commencent pas à zéro.

En variante, le seuil prédéfini M est égal au nombre N de lots d'instructions enregistré dans la mémoire de travail 9. Dans ce cas, la rapidité de l'exécution du procédé de séquencement est accélérée. Mais, le seuil prédéfini M doit être modifié en cas d'enregistrement d'un nouveau lot d'instructions dans la mémoire de travail 9.

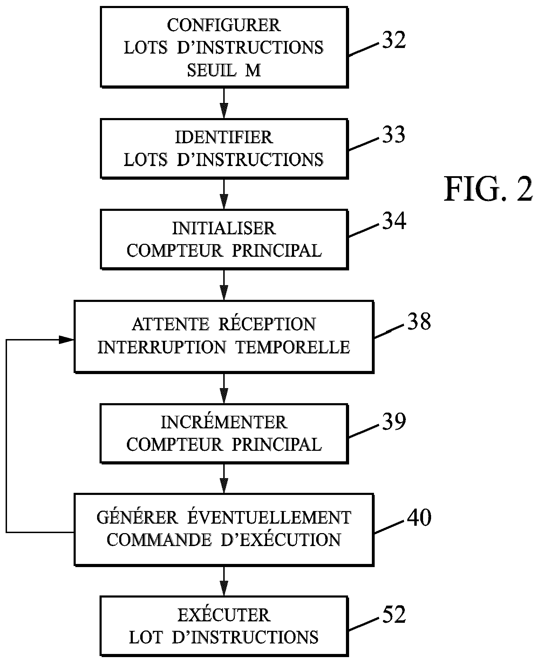

En référence à la figure 2, le procédé de séquencement selon l'invention débute par une étape préalable de configuration 32 au cours de laquelle un opérateur crée les lots d'instructions 140, 141, 142, 143 à partir de l'ensemble des instructions dont il doit planifier l'exécution.

Les instructions à exécuter sont répartis dans des lots en fonction de la charge logicielle requise, de la durée d'exécution des instructions et de la latence.

L'opérateur définit également un seuil, dit seuil prédéfini M. Ce seuil prédéfini M est égal au nombre maximal de lots d'instructions qui pourrait être exécuté par l'unité de traitement 7. Ce seuil est, par exemple, égal au nombre de lots d'instructions enregistré dans la mémoire de travail 9, c'est-à-dire N, additionné du nombre de nouvelles fonctionnalités qui pourraient, en cas de besoin être ajoutées au programme principal et qu'il faudrait séquencer.

Au cours d'une étape 33, chaque lot d'instructions 140, 141, 142, 143 est identifié par un nombre entier naturel supérieur à zéro, ci-après appelé rang R. Cette identification est réalisée en considérant la période à laquelle le lot d'instructions doit être exécuté. Le nombre entier ayant la valeur la plus faible est attribué au lot d'instructions qui doit être exécuté avec la plus petite période. Les lots d'instructions identifiés par leur rang sont enregistrés dans la mémoire de travail 9.

Au cours d'une étape 34, le compteur principal 18 est initialisé à zéro.

Lorsque l'unité de commande 6 réceptionne une interruption temporelle, au cours d'une étape 38, elle est déroutée de la tâche qu'elle est en train d'exécuter et elle incrémente, au cours d'une étape 39, le compteur principal 18 d'une unité.

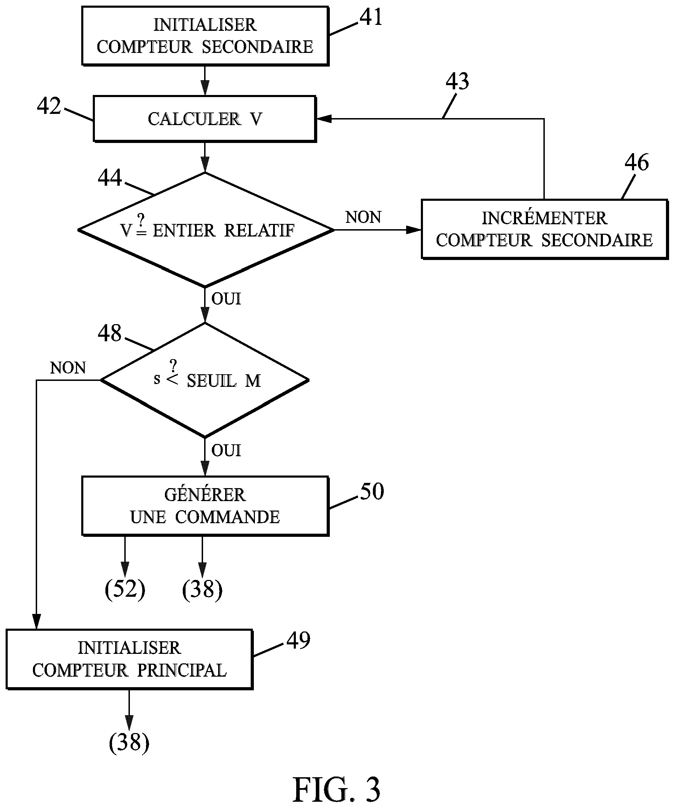

Au cours d'une étape 40, l'unité de commande 6 peut éventuellement générer une commande qui identifie un lot d'instructions à exécuter. L'étape 40 est décrite en détail ci-après en liaison avec la figure 3.

Cette commande est transmise à l'unité de traitement 7 qui sélectionne, dans la mémoire de travail 9, le lot d'instructions identifié par un rang R égal au nombre entier reçu de l'unité de commande 6 et l'exécute, au cours d'une étape 52. Comme explicité ultérieurement, ce nombre entier est la valeur instantanée s issue du compteur secondaire. L'exécution de ce lot d'instructions sera terminée lorsque l'unité de commande 6 réceptionnera une nouvelle interruption temporelle.

Lorsque l'unité de commande 6 ne génère pas de commande au cours de l'étape 40, le procédé selon l'invention retourne à l'étape 38 au cours de laquelle il attend la réception d'une nouvelle interruption temporelle. Dans ce cas, il n'y a pas de lot d'instructions éligible pour l'interruption temporelle IT. L'unité de commande 6 ne transmet pas de commande d'exécution d'un lot d'instructions pour cette interruption temporelle. Aucun lot d'instructions n'est déclenché par cette interruption temporelle.

L'étape 40 de génération ou de non-génération d'une commande d'exécution comprend des sous-étapes 41 à 50 illustrées sur la figure 3.

Au cours d'une sous- étape 41, le compteur secondaire 16 est initialisé à zéro.

Au cours d'une sous-étape 42, l'unité de commande 6 calcule une variable V selon la formule ci-dessous : V = (p - 2^{s})/ (2 × 2^{s}), dans laquelle p est la valeur instantanée du compteur principal 18 et s est la valeur instantanée du compteur secondaire 16.

Au cours d'une sous-étape 44, l'unité de commande 6 vérifie que la variable calculée V est un entier relatif.

Si la variable calculée V n'est pas un entier relatif, le procédé selon l'invention se poursuit par une sous-étape 46 au cours de laquelle le compteur secondaire 16 s'incrémente d'une unité. Puis, le procédé retourne à la sous-étape 42, au cours d'une sous-étape 43.

Si la variable calculée V est un entier relatif, l'unité de commande 6 vérifie, au cours d'une sous-étape 48, si la valeur instantanée s du compteur secondaire est inférieure au seuil prédéfini M.

Si la valeur instantanée s du compteur secondaire est inférieure au seuil prédéfini M, l'unité de commande 6 génère, au cours d'une sous-étape 50, une commande d'exécution d'un lot d'instructions. Cette commande contient la valeur instantanée s du compteur secondaire 16. Cette valeur instantanée s identifie le rang R du lot d'instructions qui sera exécuté par l'unité de traitement 7. Cette valeur instantanée s est transmise à l'unité de traitement 7. Ainsi, le procédé de séquencement selon l'invention attribue à l'interruption temporelle IT réceptionnée au cours de l'étape 38, le lot d'instructions identifié par la valeur instantanée s générée par l'unité de commande 6.

Enfin, l'unité de commande 6 retourne à l'étape 38 au cours de laquelle l'unité de commande 6 attend la prochaine interruption temporelle IT.

Si, au cours de la sous-étape 48, la valeur instantanée s du compteur secondaire est supérieure au seuil prédéfini M, le compteur principal 18 est initialisé au cours de la sous-étape 49.

Puis, le procédé selon l'invention retourne à l'étape 38. L'unité de commande 6 est en attente d'une nouvelle interruption temporelle IT.

Si l'opérateur souhaite ajouter une nouvelle fonctionnalité au programme d'ordinateur principal, la partie de programme (subroutine) générant cette nouvelle fonctionnalité constituera un lot d'instructions supplémentaire.

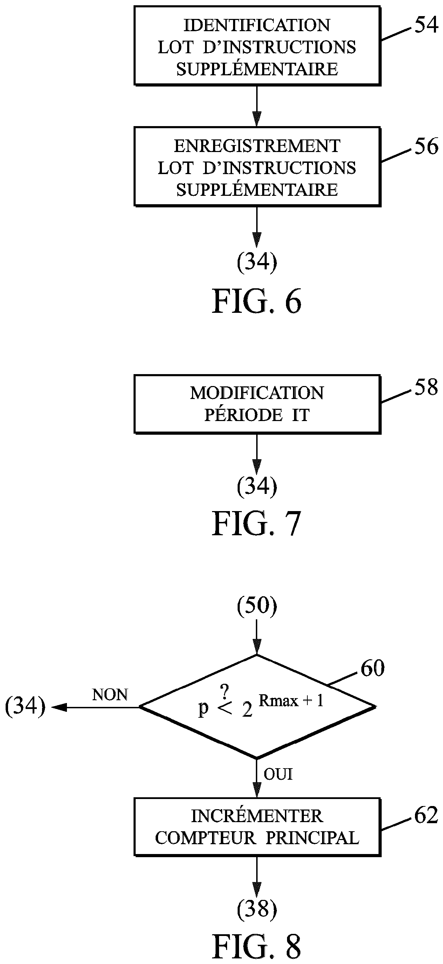

Au cours d'une étape 54, illustrée sur la figure 6, un opérateur identifie le lot d'instructions supplémentaire par un nouveau rang. Ce nouveau rang est égal au rang maximal Rmax déjà attribué à un lot d'instructions additionné d'une unité. Ce nouveau rang doit être inférieur ou égal au seuil prédéfini M. Si cela n'est pas le cas, l'opérateur peut modifier le seuil prédéfini M.

Au cours d'une étape 56, l'opérateur enregistre le lot d'instructions supplémentaire dans la mémoire de travail 9.

Après l'ajout d'une fonctionnalité supplémentaire, le procédé de séquencement selon l'invention est classiquement mis en œuvre. Il débute alors par l'étape 34 d'initialisation du compteur principal 18.

L'opérateur peut, s'il le souhaite, modifier la durée D des fenêtres temporelles au cours desquelles les lots d'instructions sont exécutés. A cet effet, l'opérateur modifie, au cours d'une étape 58, la durée D entre la réception de deux interruptions temporelles IT par commande de l'élément de commande 10 du générateur d'interruptions. Cette modification entraîne une modification de la durée D des fenêtres temporelles.

Après modification de cette durée D, le procédé de séquencement selon l'invention est classiquement mis en œuvre. Il débute par l'étape 34 d'initialisation du compteur principal 18.

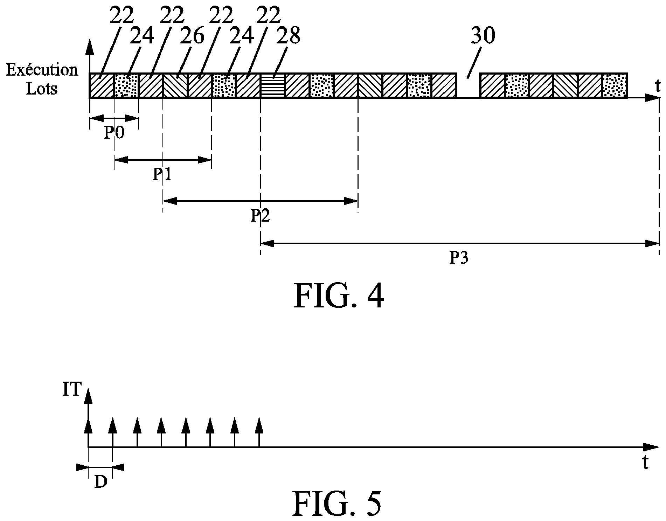

La figure 4 représente un exemple de fenêtres temporelles attribuées à l'exécution des quatre lots d'instructions illustrés sur la figure 1 en utilisant le procédé de séquencement selon l'invention. Les fenêtres temporelles attribuées aux lots d'instructions ont toutes la même durée D. Cette durée D correspond à la durée entre la génération de deux interruptions temporelles IT successives, comme illustré sur la figure 5.

Le premier lot d'instructions 140 est exécuté dans toutes les fenêtres temporelles 22. Le deuxième lot d'instructions 141 est exécuté dans toutes les fenêtres temporelles 24. Le troisième lot d'instructions 142 est exécuté dans toutes les fenêtres temporelles 26. Le quatrième lot d'instructions 143 est exécuté dans toutes les fenêtres temporelles 28. La période d'un lot d'instructions est définie dans la présente demande de brevet comme la durée entre le début de l'exécution d'un lot d'instructions et le début de l'exécution suivante de ce même lot d'instructions. La période du lot d'instructions ayant le plus petit rang Rmin est désignée ci-après par la référence P0.

Comme visible sur la figure 4, la période d'exécution d'un lot d'instructions est un multiple d'une puissance de deux (2) ou de un-demi (1/2) de la période d'exécution d'un autre lot d'instructions. Ainsi, par exemple, la période P1 du lot d'instructions 141 de rang 1 est égale à deux fois la période P0 du lot d'instructions 140 de rang 0. De manière générale, la période d'un lot d'instruction de rang i est égale à deux fois la période d'un lot d'instruction de rang i-1, pour tout entier naturel i compris entre 1 et N.

Enfin, comme visible sur la figure 4, le procédé de séquencement selon l'invention comporte des fenêtres temporelles 30 au cours desquelles aucun lot d'instructions n'est exécuté. Ces fenêtres temporelles 30 permettent de prévoir du temps disponible pour une éventuelle exécution d'un lot d'instructions supplémentaire. Ce lot d'instructions supplémentaire correspondrait à une nouvelle fonctionnalité qui pourrait être ajoutée au programme principal. Si aucune nouvelle fonctionnalité n'est ajoutée au programme principal, ces fenêtres temporelles 30 restent « vides », c'est-à-dire que l'unité de traitement 7 n'exécutera aucun lot d'instructions pendant la durée de celles-ci.

Ces fenêtres temporelles 30 non attribuées ont une période égale à deux fois la période du lot d'instructions de rang le plus élevé enregistré dans la mémoire de travail 9. Ainsi, la période des fenêtres temporelles non attribuées est égale à 2^{N} la période du lot d'instruction de rang 0, avec N le nombre de lots d'instructions.

Quel que soit le nombre de lots d'instructions à exécuter, le procédé de séquencement selon l'invention génère toujours des fenêtres temporelles au cours desquelles aucun lot d'instructions n'est exécuté, dite fenêtres temporelles non attribuées. Lorsqu'une première nouvelle fonctionnalité est ajoutée au programme principal, le procédé selon l'invention permet de séquencer un lot d'instructions supplémentaire correspondant à cette première nouvelle fonctionnalité, sans impact sur le séquencement déjà existant, comme décrit en liaison avec la figure 6. Le rajout de ce lot d'instructions supplémentaire, crée l'apparition de nouvelles fenêtres temporelles non attribuées qui pourront éventuellement servir au rajout d'une deuxième nouvelle fonctionnalité. Ces nouvelles fenêtres temporelles non attribuées ont toujours une période égale à deux fois la période du lot d'instructions de rang le plus élevé. Ce rang correspond alors au rang du lot d'instructions de la première nouvelle fonctionnalité.

Selon une variante de réalisation de l'invention, le procédé de séquencement comprend les étapes illustrées sur les figures 2, 3 ainsi que les étapes illustrées sur la figure 8.

Les étapes 32 à 52 se déroulent de la même manière que dans le procédé de séquencement à l'exception du fait que selon cette variante de réalisation, le compteur principal 18 est initialisé à une unité (= 1) au cours des étapes 34 et 49, et le compteur secondaire 16 est initialisé à la valeur du rang minimal Rmin. Selon cette variante, le rang maximal Rmax peut être supérieur au seuil prédéfini M et au nombre N de lots d'instructions.

Par ailleurs, selon cette variante de réalisation, le procédé comporte en outre les étapes illustrées sur la figure 8. Ainsi, après la sous-étape 50 de génération d'une commande d'exécution d'un lot d'instructions, l'unité de commande 6 vérifie, au cours d'une étape 60, que la valeur instantanée p du compteur principal 18 est inférieure à 2^{Rmax+1} avec dans laquelle Rmax est le rang le plus élevé des lots d'instructions enregistrés dans la mémoire de travail 9.

Si la valeur instantanée p est inférieure à 2 × 2^{(N-1)}, l'unité de commande 6 incrémente le compteur principal 18, au cours d'une étape 62.

Puis, l'unité de commande 6 retourne à l'étape 38 au cours de laquelle elle attend la réception d'une interruption temporelle IT.

Si la valeur instantanée p est supérieure à 2 × 2^{(N-1)}, l'unité de commande 6 retourne à l'étape 34 au cours de laquelle le compteur principal est initialisé à une unité.

Par exemple, le nombre de lots d'instructions N est égal à deux. Le premier lot d'instructions présente un rang égal à 1. Le deuxième lot d'instructions présente un rang égal à 3. Le seuil prédéfini M est égal à 5. Le premier lot d'instruction va être exécuté 1 fois tous les 4 interruptions temporelles. Le deuxième lot d'instructions va être exécuté tous les 16 interruptions temporels.

Avantageusement, dans ce mode de réalisation, la période d'exécution la plus longue n'est plus limité par le seuil prédéfini M.

Cette variante de réalisation est utilisée avec un seuil prédéfini M supérieur au nombre N de lots d'instructions. Elle permet de ne pas balayer tous les rangs possibles mais uniquement les rangs identifiant des lots d'instructions. Le procédé de séquencement utilisant cette variante est plus rapide et permet de rajouter des fonctionnalités supplémentaires sans avoir à modifier le seuil prédéfini M après sa conception.

Les étapes illustrées sur les figures 6 et 7 peuvent également être mises en œuvre avec cette variante de réalisation.

## Revendications

1. Procédé d'exécution d'au moins N lot d'instructions (140) enregistrés dans une mémoire de travail (9) avec N entier naturel supérieur ou égal à deux ; chaque lot d'instructions étant identifié par un nombre entier supérieur ou égal à zéro, appelé rang R ; ledit procédé étant exécuté par une unité de traitement (7) connectée à ladite mémoire de travail (9),
**caractérisé en ce que** les lots d'instructions (140) sont exécutés (52) périodiquement ; la période d'un lot d'instruction de rang i est égale à deux fois la période d'un lot d'instruction de rang i-1, pour tout entier naturel i compris entre 1 et N.

2. Circuit intégré (2) comprenant :
- un générateur d'interruptions temporelles (4) propre à générer périodiquement des interruptions temporelles (39, 54),
- une unité de commande (6) propre à réceptionner lesdites interruptions temporelles (39, 54),
- une mémoire de travail (9) contenant N lots d'instructions (140, 141, 142, 143), chaque lot d'instructions étant identifié par un nombre entier supérieur ou égal à zéro, appelé rang (R) ; ladite unité de commande (6) étant apte à mettre en œuvre un procédé de séquencement de commande d'exécution de N lots d'instructions (140, 141, 142, 143); avec N entier naturel supérieur ou égal à deux ; l'unité de commande (6) étant propre à recevoir périodiquement des interruptions temporelles (IT) et à générer des commandes d'exécution de lot d'instructions (140, 141, 142, 143) à exécuter, ladite unité de commande (6) comportant au moins un compteur principal (18), le procédé de séquencement comportant les étapes suivantes :
a) initialiser (34, 49) le compteur principal (18) ;
b) incrémenter (39) le compteur principal (18), sur réception (38) d'une interruption temporelle (IT) ;
c) générer (40) une commande d'exécution d'un lot d'instructions (140, 141, 142, 143) à exécuter, ledit lot d'instructions étant choisi en fonction d'une valeur instantanée p du compteur principal (18);
d) répéter les étapes a) à d), et
- une unité de traitement (7) connectée à ladite mémoire de travail (9) et à l'unité de commande (6),
**caractérisé en ce que** ladite unité de traitement (7) est apte à exécuter le procédé de commande d'exécution des lots d'instructions selon la revendication 1.
